Europäisches Patentamt

(19) European Patent Office  (11) Numéro de publication: **0 1 22 583**
**B1**
Office européen des brevets

(12) **FASCICULE DE BREVET EUROPEEN**

(45) Date de publication du fascicule du brevet:  (51) Int. Cl.⁴: **F 16 D 3/18,** F 16 D 3/20
13.05.87

(21) Numéro de dépôt: **84103972.0**

(22) Date de dépôt: **10.04.84**

(54) **Dispositif d'accouplement à denture pour arbres oscillants.**

(30) Priorité: **13.04.83 FR 8305995**

(43) Date de publication de la demande:
**24.10.84 Bulletin 84/43**

(45) Mention de la délivrance du brevet:
**13.05.87 Bulletin 87/20**

(84) Etats contractants désignés:
**BE DE FR GB NL**

(56) Documents cités:
**CH - A - 232 421**
**FR - A - 581 285**
**FR - A - 1 583 214**
**US - A - 2 217 969**
**US - A - 2 681 552**
**US - A - 3 453 841**

**"Cours de fourage" publié par l'Institute Français du
Pétrole (Editeur Technip), Deuxième partie, fascule 4,
"Les moteurs de fond hydrauliques", page 233**

(73) Titulaire: **ALSTHOM, 38, avenue Kléber, F-75784 Paris
Cédex 16 (FR)**

(72) Inventeur: **Tendero, Louis, Lotissement "La Pépinière",
F-38190 Brignoud (FR)**

(74) Mandataire: **Weinmiller, Jürgen et al,
Lennéstrasse 9 Postfach 24, D-8133 Feldafing (DE)**

## Description

L'invention concerne un dispositif d'accouplement à denture pour arbres oscillants.

Ce dispositif comporte

— un premier embout avec une partie massive propre à être fixée à une extrémité avant d'un premier arbre à accoupler, cet embout présentant un axe longitudinal et comportant une denture formant des portées cylindriques convexes de révolution autour d'un premier axe d'oscillation perpendiculaire à l'axe de l'embout en un centre d'accouplement, cette denture étant reliée à la partie massive de l'embout par une partie intermédiaire constituant une base de denture assurant le maintien ou l'entraînement de la denture à partir de la partie massive,

— et un deuxième embout avec une partie massive propre à être fixée à une extrémité avant d'un deuxième arbre à accoupler en regard de l'extrémité avant du premier et présentant un axe longitudinal qui passe par le centre d'accouplement et fait un angle petit avec l'axe du premier embout, ce deuxième embout étant creusé d'une rainure formée entre deux bras, chacun de ces bras étant relié à la partie massive de ce deuxième embout par une partie intermédiaire constituant une base de bras assurant le maintien ou l'entraînement du bras à partir de la partie massive de cet embout, cette rainure contenant ledit premier axe d'oscillation et ladite denture, de manière que le premier embout puisse osciller d'un petit angle autour de cet axe d'oscillation et qu'un couple de rotation du premier embout autour de son axe crée un couple de rotation du deuxième embout autour de son axe par application de forces de transmission de couples résultant de l'appui de cette denture sur ses bras dans des zones d'appui symétriques deux à deux par rapport au centre d'accouplement, ces forces étant opposées et sensiblement perpendiculaires à la fois aux axes des embouts et au premier axe d'oscillation, lesdites bases étant propres à résister aux moments fléchissants qui résultent de l'application desdites forces de transmission de couple, la base de denture étant située longitudinalement en arrière de la zone d'appui de cette denture et sensiblement à la même distance de l'axe du premier embout que cette zone d'appui, les bases de bras étant situées longitudinalement en arrière des zones d'appui des bras et sensiblement à la même distance de l'axe du deuxième embout que ces zones d'appui, de manière à éviter que l'encombrement diamétral du dispositif soit sensiblement supérieur à la distance diamétrale qui sépare lesdites zones d'appui symétriques et qui constitue le bras de levier permettant la transmission d'un couple, ladite rainure étant suffisamment profonde pour permettre au premier embout d'osciller autour d'un deuxième axe d'oscillation passant par le centre d'accouplement et perpendiculaire à la fois au premier axe d'oscillation et à l'axe du premier embout.

Un dispositif d'accouplement à denture pour arbres oscillants est connu par l'ouvrage «Cours de Forage» publié par l'Institute Français du Pétrole (Editeur Technip), voir la deuxième partie, fascicule 4, «Les moteurs de fond hydrauliques», page 233.

Dans ce dispositif connu les deux embouts sont identiques et portent chacun une denture cylindrique s'engageant dans une rainure de l'autre embout, la denture de l'un étant décalée angulairement de 90° par rapport à celle de l'autre. L'oscillation autour de l'axe de chaque denture est rendue possible par le fait que l'autre denture s'engage avec un jeu important dans la rainure correspondante. Une bille centrale coopère avec des cuvettes creusées dans les embouts pour permettre la transmission d'une poussée axiale importante sans affecter le travail des dentures, qui sont alors constituées chacune de deux dents alignées disposées de part et d'autre de la bille centrale.

Ce dispositif connu a l'inconvénient de présenter un jeu angulaire parfois gênant lors d'un changement de sens du couple transmis, et de nécessiter un usinage délicat des dents et des rainures lorsqu'on veut diminuer ce jeu tout en conservant les possibilités d'oscillation.

La présente invention a pour but de permettre la transmission de couples importants avec un jeu angulaire faible et d'assurer en même temps la simplicité de réalisation du montage, démontage et entretien, dans le cas où les oscillations des arbres ont une faible amplitude angulaire, par exemple inférieure à dix degrés dans les deux sens.

Ce but est atteint par le dispositif tel qu'il est défini par la revendication 1.

A l'aide des figures schématiques ci-jointes, on va décrire ci-après, à titre non limitatif, comment l'invention peut être mise en œuvre.

La figure 1 représente une vue en élévation d'un dispositif selon l'invention, le fourreau de ce dispositif étant coupé par un plan axial I-I de la figure 2, et une moitié de ce fourreau étant enlevée pour montrer l'intérieur du dispositif.

La figure 2 représente une vue du même dispositif en coupe partielle par un plan axial II-II de la figure 1 perpendiculaire au plan I-I.

Le dispositif décrit permet de transmettre le couple par une denture cylindrique et d'assurer la transmission de poussée et le positionnement relatif de deux arbres A1 et A2 par une bille prise entre deux logements sphériques adaptée. Il est constitué de cinq pièces fonctionnelles et deux pièces de maintien.

Les cinq pièces de fonction sont:

— un premier embout à denture cylindrique 1 montée en bout de l'arbre A1,

— un deuxième embout 2 à fente droite monté en bout de l'arbre A2,

— une bille de poussée 3,

— et deux glissières 4a, 4b constituant ledit organe de glissement.

Les deux pièces de maintien sont:

— un fourreau 25,

— et une bague sphérique concave 29.

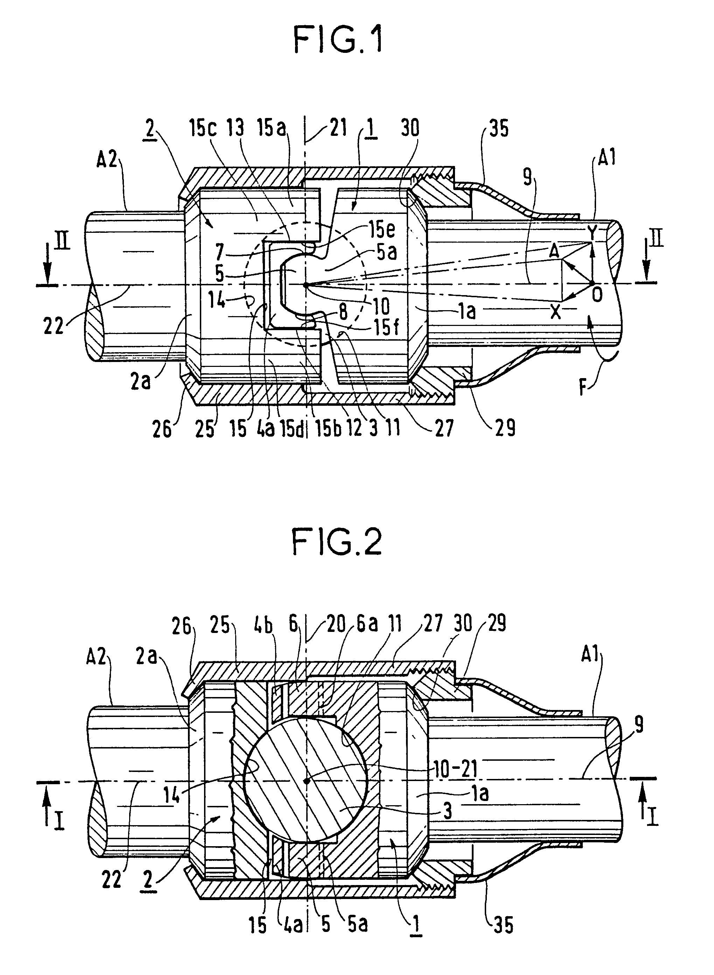

Selon les figures 1 et 2, l'embout 1 présente une partie massive 1a et il est muni de deux dents 5 et 6 dont les bases sont représentées en 5a et 6a, respectivement, et dont les flancs 7 et 8 forment des portions d'une même surface cylindrique de révolution. L'axe 20 de ce cylindre est perpendiculaire et concourant à l'axe 9 de l'embout 1 à un point 10. Il constitue le premier axe d'oscillation précédemment mentionné, le point 10 constituant le centre d'accouplement.

Lorsqu'un couple représenté par la flèche F est appliqué par l'arbre A1 à l'arbre A2 le flanc 7 de la dent 5 et le flanc 8 de la dent 6 constituent des zones d'appui, c'est-à-dire que les forces qui assurent la transmission du couple d'un embout à l'autre passent par ces zones. Lorsque le couple appliqué change de sens c'est le flanc 7 de la dent 6 et le flanc 8 de la dent 5 qui jouent le rôle de zones d'appui.

Dans la partie centrale de l'embout 1, une cuvette sphérique 11 est aménagée dans laquelle vient se loger la bille de poussée 3 de même diamètre dont le centre se confond avec le point 10.

Coopérant avec les dents 5 et 6, deux glissières 4a et 4b identiques sont munies d'un logement à flancs cylindriques au contact des flancs 7 et 8 des dents 5 et 6. Les flancs extérieurs 12 et 13 de ces glissières sont des plans parallèles entre eux et parallèles à l'axe 20.

Ces flancs plans coopèrent avec les flancs d'une rainure diamétrale traversante 15 usinée dans l'embout 2. Cette rainure est formée entre deux bras 15a et 15b dont des flancs 15e et 15f constituent les flancs de la rainure, les parties de ces flancs en regard des zones d'appui des dents 5 et 6 constituant lesdites zones d'appui de ces bras. Les bases de ces bras sont représentées en 15c et 15d, respectivement. Elles raccordent ces bras à la partie massive 2a de l'embout 2.

Dans la partie centrale de l'embout 2 une cuvette sphérique 14 vient s'appuyer sur la bille 3.

Le fonctionnement de ce dispositif est le suivant:

Un mouvement d'oscillation OA quelconque de l'axe 9 autour du point 10 peut se décomposer en deux mouvements OY et OX dans le même plan que OA, plan perpendiculaire à l'axe passant par O et par le point 10:

— un premier mouvement OY autour de l'axe 20 du cylindre des dents 5 et 6: Le mouvement de l'embout 1 se fait en appui par la cuvette 11 sur la bille 3 et se tradfuit par une rotation de la denture dans la glissière 4a et 4b qui est maintenue en rotation entre les flancs 15e et 15f de la rainure 15;

— et un deuxième mouvement OX autour de l'axe 21 perpendiculaire à l'axe 22 de l'embout 2 et à l'axe 20 du cylindre de denture. Le mouvement de l'embout 1 se traduit par un glissement rotatif (toujours avec appui de la cuvette 11 sur la bille 3) des glissières 4a et 4b dans la rainure 15. Ce glissement est rendu possible par un intervalle libre entre ces glissières et le fond de cette rainure.

Quant à la transmission du couple d'un embout à l'autre, elle s'effectue entre les bras 15a et 15b et les dents 5 et 6 par l'intermédiaire des glissières 4a et 4b. Par rapport au dispositif connu précédemment décrit l'utilisation de ces glissières permet de diminuer la hauteur des dents et donc le moment de flexion supporté par la base de ces dents lors de la transmission de couples importants.

Les pièces de maintien empêchent les embouts 1 et 2 de s'écarter l'un de l'autre et maintiennent la bille 3 en compression.

Un fourreau 25 est monté glissant sur l'embout 2 et comporte un épaulement 26 par lequel il s'appuie sur un chanfrein conique de cet embout. La paroi de ce fourreau assure le maintien en position des glissières 4a et 4b dans la rainure 15 en s'opposant à leur éventuel déplacement radial le long des dents 5 et 6.

Dans sa partie avant 27 le fourreau 25 présente un élargissement intérieur permettant le débattement de l'embout 1. Il est muni à son extrémité d'un filetage qui reçoit une bague filetée 29, (tout autre dispositif de liaison pouvant être utilisé). Cette bague forme une portée sphérique concave dont la surface 30 vient s'appuyer sur une portée sphérique convexe de même rayon qui est usinée à l'extrémité arrière de l'embout 1 ou sur une bague rapportée non représentée, et dont le centre est le point 10. Cette disposition permet la mise en place de l'embout 1 dans ce fourreau avant la mise en place de la bague à portée concave.

Lors des oscillations de l'axe 9, les surfaces sphériques 30 de la bague 29 et de l'embout 1 glissent l'une sur l'autre et interdisent le recul relatif des embouts 1 et 2.

Un manchon de caoutchouc 35 relie la bague 29 à l'arbre A1 pour assurer l'étanchéité de la zone travaillante vis-à-vis du milieu ambiant.

L'accouplement qui vient d'être décrit est notamment applicable dans des opérations de forages dans le sol, par exemple pour la recherche de pétrole.

## Revendications

1. Dispositif d'accouplement à dentures pour arbres oscillants, notamment à petits débattements angulaires,

— comportant un premier embout (1) avec une partie massive (1a) propre à être fixée à une extrémité avant d'un premier arbre à accoupler (A1), cet embout présentant un axe longitudinal (9) et comportant une denture (5, 6) formant des portées cylindriques convexes de révolution autour d'un premier axe d'oscillation (20) perpendiculaire à l'axe de l'embout en un centre d'accouplement (10), cette denture étant reliée à la partie massive de l'embout par une partie intermédiaire constituant une base de denture (5a, 6a) assurant le maintien ou l'entraînement de la denture à partire de la partie massive,

— et comportant un deuxième embout (2) avec une partie massive (2a) propre à être fixée à une extrémité avant d'un deuxième arbre à accoupler (A2) en regard de l'extrémité avant du premier arbre et présentant un axe longitudinal (22) qui passe par le centre d'accouplement (10) et fait un angle petit avec l'axe du premier embout, ce deuxième embout étant creusé d'une rainure (15) formée entre deux bras (15a, 15b), chacun de ces bras étant relié à la partie massive de ce deuxième embout par une partie intermédiaire constituant une base de bras (15c, 15d) assurant le maintien ou l'entraînement du bras à partir de la partie massive de cet embout, cette rainure contenant ledit premier axe d'oscillation (20) et ladite denture, de manière que le premier embout puisse osciller d'un petit angle autour de cet axe d'oscillation et qu'un couple de rotation du premier embout autour de son axe crée un couple de rotation du deuxième embout autour de son axe par application de forces de transmission de couple résultant de l'appui de cette denture sur ces bras dans des zones d'appui (7, 8, 15e, 15f) symétriques deux à deux par rapport au centre d'accouplement, ces forces étant opposées et sensiblement perpendiculaires à la fois aux axes des embouts et au premier axe d'oscillation, lesdites bases étant propres à résister aux moments fléchissants qui résultent de l'application desdites forces de transmission de couple, la base de denture (5a) étant située longitudinalement en arrière de la zone d'appui (7) de cette denture et sensiblement à la même distance de l'axe du premier embout que cette zone d'appui, les bases de bras (15c) étant situées longitudinalement en arrière des zones d'appui (15e) des bras et sensiblement à la même distance de l'axe du deuxième embout que ces zones d'appui, de manière à eviter que l'encombrement diamétral du dispositif soit sensiblement supérieur à la distance diamétrale qui sépare lesdites zones d'appui symétriques et qui constitue le bras de levier permettant la transmission d'un couple, ladite rainure (15) étant suffisamment profonde pour permettre au premier embout d'osciller autour d'un deuxième axe d'oscillation passant par le centre d'accouplement (10) et perpendiculaire à la fois au premier axe d'oscillation et à l'axe du premier embout,

— un organe de glissement (4a, 4b) étant interposé entre la denture (5, 6) du premier embout et les bras (15a, 15b) de la rainure (15) du deuxième embout, cet organe de glissement étant creusé pour former des portées cylindriques concaves coopérant avec les portées cylindriques convexes de cette denture avec le seul jeu nécessaire à l'oscillation du premier embout autour du premier axe d'oscillation (20), cet organe de glissement présentant en outre, de part et d'autre des flancs de cette denture, des flancs extérieurs de glissement (12, 13) plans et perpendiculaires au deuxième axe d'oscillation (21), les bras (15a, 15b) de la rainure (15) présentant des faces de glissement intérieures planes coopérant avec les flancs de glissement (12, 13) de l'organe de glissement avec le seul jeu nécessaire à l'oscillation de l'organe de glissement et du premier embout autour du deuxième axe d'oscillation, de manière à permettre ces oscillations sans créer de jeu lors de la transmission d'un couple de rotation d'un embout à l'autre,

— une première (11) et une deuxième (14) cuvettes étant creusées dans le premier (1) et le deuxième (2) embout, ces cuvettes formant deux portions de surface sphérique de glissement s'étendant autour des axes (9, 22) de ces deux embouts, respectivement, ces portions appartenant à une même sphère centrée sur le centre d'accouplement (10),

— une bille de poussée sphérique (3) de même diamètre étant disposée en appui dans ces deux cuvettes pour permettre de transmettre une poussée axiale d'un embout à l'autre sans efforts sur la denture (5, 6) et l'organe de glissement (4a, 4b),

— cette denture étant constituée de deux dents (5, 6) de part et d'autre de cette bille,

— la rainure (15) s'étendant de part et d'autre de cette bille,

— cet organe de glissement étant constitué de deux glissières (4a, 4b) disposées de part et d'autre de cette bille et comportant chacune deux bras qui sont disposés de part et d'autre de ces dents et qui présentent lesdites portées cylindriques concaves et lesdites flancs de glissement plans (12, 13), ces deux bras étant réunis par une base entre laquelle et le fond de la rainure (15) est ménagé le jeu permettant l'oscillation autour du deuxième axe d'oscillation (21).

2. Dispositif selon la revendication 1, caractérisé par le fait qu'il comporte en outre des pièces de maintien reliant les deux embouts (1, 2) pour les empêcher de s'écarter l'un de l'autre.

3. Dispositif selon la revendication 2, caractérisé par le fait que les pièces de maintien sont constituées par un fourreau rigide (25) fixé à l'un (2) desdits embouts, prolongeant celui-ci en passant autour de l'autre embout (1) et portant une portée sphérique concave (30) qui coopère avec une portée sphérique convexe formée sur cet autre embout, ou sur une pièce annulaire rapportée pouvant faciliter son exécution, ces portées étant centrées toutes deux sur le centre d'accouplement (10).

4. Dispositif selon la revendication 3, caractérisé par le fait que la portée sphérique concave (30) est formée par une bague (29) (ou par une pièce intermédiaire pouvant faciliter son exécution), vissée dans le fourreau (25) et faisant saillie radiale intérieure dans ce fourreau de manière à permettre la mise en place dudit autre embout (1) dans ce fourreau avant la mise en place de cette bague.

5. Dispositif selon la revendication 3, caractérisé par le fait qu'un manchon souple (35) relie de manière étanche le fourreau (25) audit autre embout (1) et assure l'isolement des parties frottantes du milieu extérieur ambiant.

**Patentansprüche**

1. Gezahnte Kopplungsvorrichtung für schwingende Wellen, insbesondere mit geringen Winkelauslenkungen,

— die ein erstes Ansatzstück (1) mit einem massiven Teil (1a) aufweist, das an einem vorderen Ende einer ersten zu koppelnden Welle (A1) befestigt werden kann, wobei dieses Ansatzstück eine Längsachse hat und eine Zahnung (5, 6) aufweist, die konvexe zylindrische Stützflächen bildet, welche zu einer ersten Schwingachse (20) drehsymmetrisch sind, die senkrecht zur Achse des Ansatzstücks in einem Kopplungszentrum (10) liegt, wobei diese Zahnung mit dem massiven Teil des Ansatzstücks über einen Zwischenbereich verbunden ist, der eine Zahnbasis (5a, 6a) bildet, die das Halten oder das Antreiben der Zahnung ausgehend von dem massiven Teil bewirkt,

— und ein zweites Ansatzstück (2) mit einem massiven Teil (2a) aufweist, das an einem vorderen Ende einer zweiten zu koppelnden Welle (A2) gegenüber dem vorderen Ende der ersten Welle befestigt werden kann und eine Längsachse (22) aufweist, die durch das Kopplungszentrum (10) verläuft und einen kleinen Winkel mit der Achse des ersten Ansatzstücks bildet, wobei dieses zweite Ansatzstück eine Nut (15) aufweist, die zwischen zwei Armen (15a, 15b) gebildet wird, und wobei jeder dieser Arme mit dem massiven Teil dieses zweiten Ansatzstücks über einen Zwischenbereich verbunden ist, der eine Basis (15c, 15d) für die Arme bildet, die das Halten oder das Antreiben des Arms ausgehend von dem massiven Teil dieses Ansatzstücks bewirkt, wobei diese Nut die erste Schwingachse (20) und die Zahnung enthält, so dass das erste Ansatzstück mit einem kleinen Winkel um diese Schwingachse schwingen kann und dass ein Drehmoment des ersten Ansatzstücks um seine Achse ein Drehmoment des zweiten Ansatzstücks um seine Achse durch Anwendung von Drehmomentübertragungskräften erzeugt, die aus dem Abstützen dieser Zahnung auf diesen Armen in Stützzonen (7, 8, 15e, 15f) resultieren, welche jeweils paarweise symmetrisch in bezug auf das Kopplungszentrum sind, wobei diese Kräfte entgegengesetzt und zugleich im wesentlichen senkrecht zu den Achsen der Ansatzstücke und zur ersten Schwingachse sind, wobei die Basen den Biegemomenten widerstehen können, die aus der Anwendung der Drehmomentübertragungskräfte resultieren, wobei die Zahnungsbasis (5a) in Längsrichtung hinter der Stützzone (7) dieser Zahnung und im wesentlichen im gleichen Abstand von der Achse des ersten Ansatzstückes wie diese Stützzone angeordnet ist, wobei die Basen der Arme (15c) in Längsrichtung hinter den Stützzonen (15e) der Arme und im wesentlichen im gleichen Abstand von der Achse des zweiten Ansatzstücks wie diese Stützzonen angeordnet sind, um zu vermeiden, dass die diametralen Abmessungen der Vorrichtungen wesentlich grösser sind als der diametrale Abstand, der die symmetrischen Stützzonen trennt und der den Hebelarm bildet, der die Übertragung eines Drehmoments ermöglicht, wobei die Nut (15) tief genug ist, um es dem ersten Ansatzstück zu erlauben, um eine zweite Schwingachse zu schwingen, die durch das Kopplungszentrum (10) verläuft und zugleich zur ersten Schwingachse und zur Achse des ersten Ansatzstücks senkrecht ist,

— wobei ein Gleitorgan (4a, 4b) zwischen die Zahnung (5, 6) des ersten Ansatzstücks und die Arme (15a, 15b) der Nut (15) des zweiten Ansatzstücks eingesetzt ist, wobei dieses Gleitorgan ausgehöhlt ist, um zylindrische konkave Auflageflächen zu bilden, die mit den konvexen zylindrischen Stützflächen dieser Zahnung zusammenwirken, lediglich mit einem Spiel, das für das Schwenken des ersten Ansatzstücks um die erste Schwingachse (20) notwendig ist, wobei dieses Gleitorgan ausserdem auf beiden Seiten der Flanken dieser Zahnung ebene äussere Gleitflanken (12, 13) aufweist, die senkrecht zur zweiten Schwingachse (21) liegen, wobei die Arme (15a, 15b) der Nut (15) ebene innere Gleitflächen aufweisen, die mit den Gleitflanken (12, 13) des Gleitorgans zusammenwirkwen und lediglich ein Spiel aufweisen, das für die Schwingung des Gleitorgans und des ersten Ansatzstücks um die zweite Schwingachse notwendig ist, so dass diese Schwingungen ermöglicht werden, ohne dass während der Übertragung des Drehmoments von einem Ansatzstück zum anderen ein Spiel entsteht,

— wobei eine erste (11) und eine zweite Schale (14) in dem ersten (1) und dem zweiten Ansatzstück (2) vorgesehen sind, die zwei kugelkalottenförmige Oberflächen-Gleitbereiche bilden, die sich um die Achsen (9, 22) dieser beiden Ansatzstücke herum erstrecken, wobei diese Bereiche in eine gemeinsame Kugel eingeschrieben sind gehören, die auf das Kopplungszentrum (10) zentriert ist,

— wobei eine Druckkugel (3) mit dem gleichen Durchmesser in diesen beiden Schalen liegend angeordnet ist, um es zu ermöglichen, einen axialen Druck von einem Ansatzstück zum anderen ohne Krafteinwirkung auf die Zahnung (5, 6) und das Gleitorgan (4a, 4b) zu übertragen,

— wobei diese Zahnung aus zwei Zähnen (5, 6) zu beiden Seiten dieser Kugel besteht,

— wobei die Nut (15) sich zu beiden Seiten dieser Druckkugel erstreckt,

— wobei dieses Gleitorgan aus zwei Gleitschienen (4a, 4b) besteht, die zu beiden Seiten dieser Druckkugel angeordnet sind und je zwei Arme aufweisen, die zu beiden Seiten dieser Zähne angeordnet sind und die die konkaven zylindrischen Stützflächen und die ebenen Gleitflanken (12, 13) aufweisen, wobei diese beiden Arme durch eine Basis verbunden werden, zwischen der und dem Boden der Nut (15) sich das Spiel befindet, das die Schwingung um die zweite Schwingachse (21) ermöglicht.

2. Vorrichtung nach Anspruch 1, dadurch gekennzeichnet, dass sie ausserdem Haltestücke aufweist, die die beiden Ansatzstücke (1, 2) miteinander verbindet, um sie daran zu hindern, sich voneinander zu entfernen.

3. Vorrichtung nach Anspruch 2, dadurch gekennzeichnet, dass die Haltestücke aus einer starren Buchse (25) bestehen, die an einem der Ansatzstücke (2) befestigt ist und dieses verlängert, indem sie um das andere Ansatzstück (1) herum verläuft, und die eine konkave kugelförmige Auflagefläche (30) besitzt, die mit einer konvexen kugelförmigen Auflagefläche zusammenwirkt, die auf diesem anderen Ansatzstück ausgebildet ist, oder auf einem separaten ringförmigen Stück, um seine Herstellung zu erleichtern, wobei diese Auflageflächen beide auf das Kopplungszentrum (10) zentriert sind.

4. Vorrichtung nach Anspruch 3, dadurch gekennzeichnet, dass die konkave kugelförmige Auflagefläche (30) aus einem Ring (29) (oder aus einem Zwischenstück, das die Herstellung erleichtern kann) besteht, der in die Buchse (25) eingeschraubt ist und radial nach innen in diese Buchse vorsteht, um es zu ermöglichen, das andere Ansatzstück (1) vor dem Anbringen dieses Rings in der Buchse anzuordnen.

5. Vorrichtung nach Anspruch 3, dadurch gekennzeichnet, dass eine biegsame Muffer (35) die Buchse (25) mit dem anderen Ansatzstück (1) dicht verbindet und die Isolierung der reibenden Teile gegenüber dem Umgebungs-Aussenmilieu bewirkt.

## Claims

1. A toothed coupling device for oscillating shafts, in particular shafts oscillating over a small angle,

— comprising a first end-piece (1) having a solid block (1a) suitable for attachement to a front end of a first shaft (A1) to be coupled, said first end-piece having a longitudinal axis (9) and including a toothing (5, 6) forming convex cylindrical bearing surfaces of rotational symmetry about a first oscillation axis (20) perpendicular to the axis of the end-piece at a coupling center (10), said toothing being connected to the solid block of the end-piece by an intermediate portion constituting a base (5a, 6a) for said toothing and serving to retain and to said toothing from said solid block,

— and comprising a second end-piece (2) having a solid block (2a) suitable for attachement to a front end of a second shaft (A2) to be coupled facing the front end of the first shaft and having a longitudinal axis (22) which passes through the coupling center (10) at a small angle with respect to the axis of the first end-piece, said second end-piece having a groove (15) formed between two arms (15a, 15b), each of these arms being connected to the solid block of this second end-piece by an intermediate portion constituting a base (15c, 15d) for said arms and serving to retain or to drive the arm from the solid block of this end-piece, said groove containing said first oscillation axis (20) and said toothing in such a manner that the first end-piece is capable of oscillating through a small angle about this oscillation axis while enabling torque about the axis of the first end-piece to create torque about the axis of the second end-piece by applying thrust transmission forces resulting from the thrust exerted by this toothing on said arms in bearing zones (7, 8, 15e, 15f) which are symmetrically disposed in pairs about said coupling center, said thrust forces being opposite and substantially perpendicular to the axes of the end-pieces and to the first oscillation axis, said bases being suitable for withstanding the bending moments resulting from the application of said torque-transmitting thrust forces, the base (5a) of the toothing being situated longitudinally behind the bearing zone (7) of this toothing and substantially at the same distance from the axis of the first end-piece as said bearing zone, and the bases of the arms (15c) being situated longitudinally behind the bearing zones (15e) of the arms and substantially at the same distance from the axis of the second end-piece as said bearing zones, in such a manner as to avoid the device extending diametrically substantially any further than the diametrical distance between the symmetrically disposed bearing zones which constitutes the lever arm for transmitting torque, said groove (15) being sufficiently deep to enable the first end-piece to oscillate about a second oscillation axis passing through the coupling center (10) and perpendicular both to the first oscillation axis and to the axis of the first end-piece,

— a slide member (4a, 4b) being interposed between the toothing (5, 6) of the first end-piece and the arms (15a, 15b) of the groove (15) of the second end-piece, said slide member being hollow and presenting concave cylindrical bearing surfaces cooperating with the convex cylindrical bearing surfaces of the the toothing with sufficient clearance to enable the first end-piece to oscillate about the first oscillation axis (20), said slide member further presenting, on either side of the flanks of said toothing, outher sliding flanks (12, 13) which are plane and perpendicular to the second oscillation axis (21), the arms (15a, 15b) of the groove (15) having facing plane inner slide faces that cooperate with the slide flanks (12, 13), of the slide member with sufficient clearance to enable the slide member and the first end-piece to oscillate about the second oscillation axis, said clearance being sufficient to enable these oscillations, but not being great enough to interfere with the transmission of torque between said end-pieces,

— first (11) and second bowls (14) being hollowed out in said first (1) and second end-pieces (2), said bowls forming two portions of a spherical slide surface, extending respectively around the axes (9, 22) of said end-pieces, and belonging to a commone sphere centered to said coupling center (10),

— a spherical thrust ball (3) of the same diameter being disposed in a thrust relationship inside said bowls to transmit axial thrust between said end-pieces without loading said toothing (5, 6) or said slide member (4a, 4b),

— said toothing being constituted by two teeth (5, 6) on either side of said ball,

— said groove (15) extending on either side of said ball,

— said slide member being constituted by two separate slide members (4a, 4b) on either side of said ball and each comprising two arms which are disposed on either side of an associated tooth and which have said concave cylindricyl bearing surfaces and said plane slide flanks (12, 13), these two arms being interconnected by a base leaving sufficient clearance between itself and the bottom of the groove (15) to enable oscillation about said second oscillation axis (21).

2. A device according to claim 1, characterized in that it further includes retaining members (20) connecting said first and second end-pieces against being pulled apart from each other.

3. A device according to claim 2, characterized in that the retaining members are constituted by a rigid sleeve (25) which is fixed to one of the end-pieces (2) and which extends beyond said end-piece to surround the other end-piece (1), and which has a concave spherical bearing surface (30) which cooperates with a convex spherical bearing surface formed on the other end-piece, or on a part added thereto in order to facilitate its manufacturing, both of said bearing surfaces being centered on said coupling center (10).

4. A device according to claim 3, characterized in that said concave spherical bearing surface (30) is formed on a ring (29) (or on an intermediate member for facilitating its manufacturing) which is screwed into said sleve (25) and which projects radially inwardly from said sleeve in such a manner as to enable said other end-piece (1) to be placed inside said sleeve before said ring is screwed in place.

5. A device according to claim 3, characterized in that a flexible casing (35) connects said sleve (25) in a sealed manner to said other end-piece (1) to isolate the bearing surface from the surrounding medium.

0 122 583

# FIG.1

# FIG.2

7